# EUROPEAN PATENT SPECIFICATION

(11) **EP 2 304 477 B1**
(45) Date of publication and mention of the grant of the patent: **23.05.2018**
(21) Application number: 09772629.3
(22) Date of filing: 30.06.2009
(51) Int. Cl.: G01W 1/08

(54) **AUTOMATIC BALLOON LAUNCHER AND METHOD FOR THE AUTOMATIC LAUNCH OF METEOROLOGICAL BALLOONS**
AUTOMATISCHE BALLONSTARTVORRICHTUNG UND VERFAHREN ZUM AUTOMATISCHEN START VON METEOROLOGISCHEN BALLONS
LANCEUR AUTOMATIQUE DE BALLONS ET PROCÉDÉ DE LANCEMENT AUTOMATIQUE DE BALLONS MÉTÉOROLOGIQUES

(30) Priority: 02.07.2008 FI 20085684
(43) Date of publication of application: 06.04.2011
(73) Proprietor: VAISALA OYJ, 01670 Vantaa (FI)
(72) Inventor: VOLOTINEN, Sami, FI-Vantaa 01670 (FI); VON BAGH, Hans, FI-Vantaa01670 (FI); REKIKOSKI, Ilkka, FI-Vantaa 01670 (FI); STOR-PELLINEN, Jyrki, FI-Vantaa 01670 (FI)
(74) Representative: Seppo Laine Oy
(86) International application number: PCT/FI2009/050596
(87) International publication number: WO 2010/000942

(56) References cited:
- JP-A- 2006 038 725
- US-A- 4 564 159
- US-A- 5 895 010

## Description

The present invention relates to an automatic balloon release apparatus for releasing gas-filled balloons according to the preamble of the independent apparatus claim.

The present invention also relates to a method of automatically releasing balloons according to the preamble of the independent method claim.

The present invention relates to releasing meteorological observation balloons. The weather balloons are released from the ground. The balloons, usually filled with hydrogen or helium gas, are provided with a meteorological apparatus, often a kind of a radiosonde. The connected radiosonde travels the distance determined by the travel capacity of the weather balloon, measuring during the travel, among others, the ambient temperature, humidity, pressure, ozone, wind speed or other quantities relating to weather observations. When the observation balloon and the radiosonde - here referred to as the sonde unit - reach an altitude of about 30 kilometres, the balloon explodes and the radiosonde falls to the ground. During the flight, the radiosonde transmits the measured data to a receiving apparatus on the ground, the apparatus converting the received data to weather observations that are often automatically transferred for worldwide use.

It is known that weather balloons can be released one by one from a manned or automatic release station, which means that at least some degree of operator participation is a requirement of successful operation of the station. In fully manned operation the operator prepares the balloons and the components provided therewith and performs the actual release operation. Correct filling degree is an essential part of the preparation and it must be monitored during the release operation to ensure successful filling. The filling degree of the balloon is monitored by measuring its buoyancy, which can be estimated by means of auxiliary weight arrangements. The auxiliary weights can be used, for example, so that when all auxiliary weights have been lifted off their respective base, the buoyancy can be considered sufficient for releasing the balloon. Alternatively, the flow of the filling gas can be monitored to determine the volume of the gas flowed into the balloon and to further determine the buoyancy of the balloon.

In automatic operation the operator is not directly needed for releasing the balloon, but the operator is instead present only when preparing the station into release condition, meaning loading the balloon reserve with balloons in operation condition. Automatic release stations are used especially in places with difficult access or that are situated in remote locations or both. The operation of release stations can also be controlled by means of a number of arrangements. The release decision can be based on, for example, the state of air traffic or it can be timed to take place at a pre-determined time. The balloon reserve is typically a certain kind of index table, the storage bays of which contain balloons in an amount sufficient to last in unmanned operation for a desired time. During release, the balloon reserve is moved so that the balloon to be released is in the correct position for release or it is transported further to the release capsule. In order to transport the balloon to the automatic release system a large number of moving parts is usually needed.

US 5895010 A discloses a radiosonde balloon launching system that has modules for receiving a balloon and a radiosonde. The modules are arranged to a circular array inside a silo which protects the array and particularly the balloon during launch.

JP 2006038725 A discloses a radiosonde balloon launching system comprising a preparation room for preparing the radiosonde for launching and a balloon hatch which has a pathway to the preparation room for receiving the unit for launch. A rotatable circular turntable is provided to the preparation room and has thereon a plurality of radially arranged trays for receiving the balloon which is tethered to a radiosonde. To prepare for launch, a tray is moved from the preparation room through the pathway to the hatch.

US 4564159 A discloses a balloon reserve with a plurality of sequentially arranged positions for receiving and releasing balloons and radiosondes tethered thereto.

There are considerable disadvantages with the above-mentioned technique. The labour costs caused by manned release stations are obvious, but the prior art automatic release stations also need considerable labour sacrifices, due to the well-known fact that the balloon reserves must be charged one balloon at a time, leading to long preparation periods. The essential problem with preparation periods is that the elaborate stage of charging the balloon reserve must be carried out at the release station, requiring the time of the operator and reducing efficiency.

Due to the balloon reserves, the current release methods are vulnerable especially in case of malfunctions. In case there is a malfunction, such as explosion of the balloon during feeding stage, the known systems can not release a replacement balloon into the air in such a situation, which is not desirable especially with regard to the requirements of operational reliability of the product. In known systems, the large number of moving parts also makes the situation difficult, whereby the tendency to malfunctions simultaneously with production and maintenance costs increases even more.

The purpose of the invention is to solve at least some of the above-mentioned problems and to create an improved method for automatically releasing a weather balloon. The method according to the invention for automatically releasing sonde units with an automatic balloon release apparatus for sonde units is defined in claim 1. The balloon release apparatus comprises at least one balloon reserve with a plurality of balloon storage bays. Each storage bay is adapted to store a sonde unit. The balloon release apparatus comprises control means for controlling the filling operation, filling means for filling the balloons of the sonde units of the balloon reserve, and release means for releasing the sonde units. In order to fill each balloon of a respective sonde unit the balloon reserve (14) is provided with gas fill conduits. The balloon reserve is formed of a basket-like matrix containing said storage bays and the sonde units are stored pre-charged in the balloon reserve prior to the release, the balloon reserve being kept stationary during storage and release. Further, during the release phase of the method according to the invention the sonde unit is released by means of an automatic balloon release apparatus, the release of which is controlled by control means on the basis of data automatically acquired from measurement apparatuses. In case of a malfunction, according to the invention the next suitable sonde unit is chosen for release from the balloon reserve. More specifically, the method for automatically releasing sonde units according to the invention is characterized by what is disclosed in the characterizing part of the independent method claim 1.

Considerable advantages are achieved with the present invention. Due to the reliable and simple design the automatic balloon release apparatus according to the invention can realize considerable cost savings. First, the novel unmanned method of releasing the balloons to air allows personnel cost savings and reduces release delays. In a solution according to the invention there is only little need for the presence of an operator, as the sonde units can be precharged into the basket at factory or other location, where it is possible to focus on this operation, thus reducing unit costs. Thus, the operator is only needed at the release location for removing the used sonde basket and installing a new one and no special service or charging space is needed at the release site. In addition, due to the simple construction, the automatic balloon release apparatuses according to the invention can be produced as units in various sizes having a similar basic design, whereby the product can be produced as a modular product, thus further creating cost savings and an increase of reliability as batch sizes increase, as can be derived from known modular endeavours. Thus, reliability is the second central advantage of the apparatus and method according to the invention. Due to its robust design the present automatic balloon release apparatus contains no moving parts, excluding the solenoids, the operation reliability of which is known to be very good. The design is additionally nearly insensitive to malfunctions, as in case of e.g. a filling problem a replacement sonde unit can be released from the apparatus. Thus, the apparatus is not very vulnerable even in case of unforeseen filling problems.

In the following, the embodiments of the invention are described in more detail by means of reference to the appended drawings.
Figure 1 illustrates an automatic balloon release apparatus 10.
Figure 2 illustrates the contents of one balloon storage bay 11 according to one embodiment.

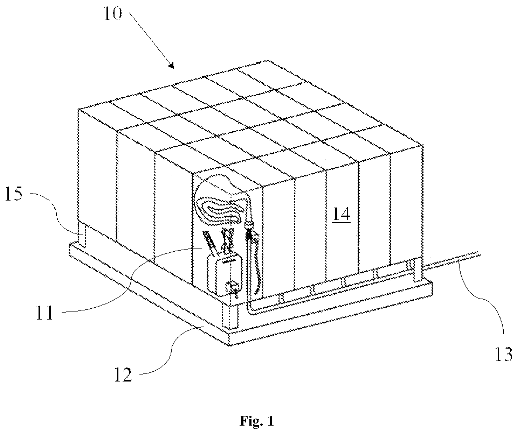

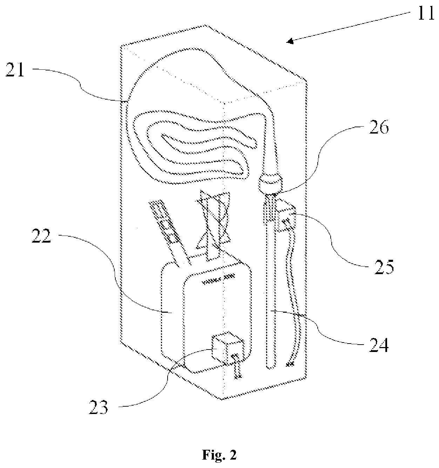

As can be seen from figures 1 and 2, the automatic balloon release apparatus 10 is preferably a matrix-like balloon reserve 14 containing a number of balloon storage bays 11 for the release and storage prior to the release of the sonde units. The balloon storage bay 11 can be a modular unit connected to the body 14 of the balloon reserve by means of, for example, a form bond. Thus a defective or empty balloon storage bay 11, for example, can easily be replaced by an intact or full one. In the case of figure 1 there are 24 balloon storage bays 11, each bay being connected to a dedicated gas conduit 13 through which the gas filling the balloon 21 is directed into the balloon. The gas conduits 13 can be an integral part of the balloon reserve 14, whereby in installation situation the balloon reserve 14 can be quickly placed on support pieces, subsequent to which the collector tube of the gas conduits 13 is connected to the gas connection of the release station. The gas conduits 13 can also be separate from the balloon reserve 14, whereby the gas connection is separately connected into each balloon storage bay 11 during installation. In both cases the fill head 24 of the gas conduit 13 is connected to the mouth of the balloon 21, whereby the gas connection from the gas system of the release station to the balloon 21 is formed. Similarly, in both cases the gas fill is electrically controlled by means of a magnet valve 25 connected to the fill head 24. Correspondingly, the used balloon reserve 14 can be completely removed from the balloon release apparatus 10, whereby the balloon release apparatus 10 can be completed with a new sonde unit kit simply by replacing the empty balloon reserve 14 by a full, precharged balloon reserve 14.

Typically, the balloon release apparatus 10 is installed horizontally to the release tank of the unmanned balloon release station providing weather protection to the apparatus. In connection with the release the door of the release tank is opened, whereby the released sonde unit 21, 22 can rise from the tank and commence probing.

As can be seen from figure 2, the balloon storage bay 11 includes a sonde unit 21, 22 consisting of a balloon 21 and a radiosonde 22 connected thereto by means of, e.g. a rope, as well as means for filling and releasing it. The size of the balloon 21 is determined by the desired probing height and the balloon reserve can be filled with balloons of different sizes, if needed. The balloon 21 is provided with a balloon-specific radiosonde 22 having sensors for measuring the desired quantities, as well as the necessary positioning sensors, such as a GPS receiver. The radiosonde 22 can also be provided with a control apparatus 23 having a release solenoid, providing the radiosonde 22 with current during storage and acting as a communication interface between it and the release station. Prior to release, the radiosonde 22 is not in operational condition. Thus the radiosonde 22 must be switched to operational connection with a control apparatus 23 just before the release.

During switching to release condition the control apparatus 23 starts and initializes the radiosonde 22 by, among others, executing a test program in order to find out the operational condition, by calibrating it and by setting the correct operation frequencies. When the radiosonde 22 is being switched to operational condition the control apparatus 23 can provide it with voltage that can be used for charging the battery of the radiosonde 22, in case non-rechargeable batteries are not used as voltage source. The preparing to operational condition can also be performed using remote control, whereby there is no need for a balloon storage bay specific control apparatus 23, instead, the apparatus can be a centralized control apparatus based on wireless data transmission.

When the start and initialization are ready, the radiosonde 22 is in operational condition and the release solenoid of the control apparatus 23 can cut the communication connection by pushing the radiosonde 22 off the control apparatus 23. Alternatively the release solenoid can be a separate apparatus instead of a part of the control apparatus 23.

During the filling phase of the balloon 21 its weight is monitored by means of an electronic scale 12 measuring the weight of the balloon reserve 14, the value of which is used for determining the buoyancy of the balloon 21 and, further, its degree of filling. The calculation of the degree of filling requires that the weight of each balloon size when full of gas is known with a reliable accuracy to avoid under- and overfilling. The weight of the balloon size also always varies a bit and in addition to size, the weight of the sonde connected thereto, the weight of the filling gas and the ambient temperature have an effect on it. The electronic scale 12 can in practice be any means reacting to pressure and being capable of electronically transmitting measurement data, which is a requirement for remote control. The scale must additionally be very accurate at its operation range. Said means reacting to pressure can be, for example, in addition to electronic scales, pressure sensors of various types and pietzo-electric elements, for example.

The actual release is provided by means of a release solenoid 26, preferably located between the fill head 24 and the balloon 21. Having received an electric control signal the release solenoid 26 releases the balloon 21 from the fill head 24, while the magnet valve 25 simultaneously closes the gas feed to the balloon 21. When the release solenoid 26 has released the balloon 21 from the fill head 24, the mouth of the balloon 21 is sealed, and the fill pressure can not leak from the balloon 21. Subsequent to this the balloon 21 rises from the storage bay 11, pulling with it the radiosonde 22 connected thereto, the radiosonde 22 having been brought to operational condition with an operation switch 23. Alternatively, the release solenoid 26 can be made as a part of the magnet valve 25, whereby the same actuator contains the valve controlling the gas feed and the solenoid releasing the balloon 21. Further alternatively the releasing of the balloon 21 from the fill head 24 can be carried out so that the filled balloon 21 is released by itself from the fill head 24 as it rises from the balloon storage bay 11.

In order to verify a successful release the balloon storage bay 11 can be provided with a separate presence switch or the presence data can be obtained from the control data history of the operation switch 23. The separate presence switch can be, for example, a proximity sensor, the presence data of which can be based on, for example, measuring the inductance or dielectricity constant of the subject or it can be based on contact. The main point of the operation of the presence switch is, however, that its measurement data can be transmitted and received electronically. In this context the term "sonde unit" means a balloon to be filled with gas and a radiosonde connected thereto. The term "balloon reserve", on the other hand, refers to the magazine used for storage prior to the release of the sonde units that can in the case of the current invention be used for the release of sonde units as well.

## Claims

1. A method of automatically releasing balloons with an automatic balloon release apparatus (10) for sonde units (21, 22), the balloon release apparatus (10) comprising:
- at least one balloon reserve (14) comprising a plurality of balloon storage bays (11), each storage bay (11) being adapted to store a sonde unit (21, 22);
- control means for controlling the filling operation;
- filling means for filling the balloons (21) of the sonde units (21, 22) of the balloon reserve (14); and
- release means for releasing the sonde units (21, 22),
wherein in order to fill each balloon (21) of a respective sonde unit (21, 22) the balloon reserve (14) is provided with gas fill conduits (13, 24),
wherein the balloon reserve (14) is formed of a basket-like matrix containing said storage bays (11),
**characterized in that** said balloon reserve (14) is removed as a unit.

2. A method of releasing sonde units (21, 22) according to the method of claim 1, in which method:
- the sonde units (21, 22) are stored pre-charged in the balloon reserve (14) prior to the release;
- the sonde unit (21, 22) is released by means of the automatic balloon release apparatus (10);
- the balloon reserve (14) is kept stationary during storage and release;
- the release is controlled automatically by means of control means on the basis of information received from measurement apparatuses (12);
- in case of a malfunction the next suitable sonde unit (21, 22) is selected for release from the balloon reserve (14).

3. A method according to claim 2 for automatically releasing sonde units (21, 22);
**characterized in that**
the weight of the balloon (21) is measured by means of measurement apparatuses either directly or indirectly, and the fill degree of the balloon (21) is derived from these results.

4. A method according to any one claims 2 or for automatically releasing sonde units (21, 22);
**characterized in that**
the release decision is made automatically on the basis of the fill degree of the balloon (21).

5. A method according to claim 4 for automatically releasing sonde units (21, 22);
**characterized in that**
the fill degree is measured by means of a scale or a corresponding means reacting to pressure, the measurement data of which is electronically received form, the scale or the like measuring directly or indirectly the weight of the automatic balloon release apparatus (10), the fill degree of the balloon (21) to be filled being derived from this value.

6. A method according to any of claims 3 to 5 for automatically releasing sonde units (21, 22);
**characterized in that**
the presence data of sonde units (21, 22) is acquired by means of presence switches.

7. A method according to any of claims 2 to 6 for automatically releasing sonde units (21, 22);
**characterized in that**
the balloon reserve (14) can be removed in its entirety from the balloon release apparatus (10), whereby the sonde units (21, 22) of the balloon release unit (10) can be completed by replacing the balloon reserve (14) with a new one.

## Patentansprüche

1. Verfahren des automatischen Freisetzens von Ballons mit einem automatischen Ballonfreisetzungsgerät (10) für Sondeneinheiten (21, 22), wobei das Ballonfreisetzungsgerät (10) Folgendes umfasst:
- mindestens eine Ballonreserve (14), umfassend eine Vielzahl an Speicherschächten (11), wobei jeder Speicherschacht (11) zum Lagern einer Sondeneinheit (21, 22) angepasst ist;
- Steuerungsmittel zum Steuern des Befüllungsvorgangs;
- Befüllungsmittel zum Befüllen der Ballons (21) der Sondeneinheiten (21, 22) der Ballonreserve (14); und
- Freisetzungsmittel zum Freisetzen der Sondeneinheiten (21, 22),
wobei, um jeden Ballon (21) einer jeweiligen Sondeneinheit (21, 22) zu befüllen, die Ballonreserve (14) mit Gasbefüllungsleitungen (13, 24) bereitgestellt ist,
wobei die Ballonreserve (14) aus einer korbähnlichen Matrix, die Speicherschächte (11) enthaltend, gebildet ist,
**dadurch gekennzeichnet, dass** die Ballonreserve (14) als eine Einheit entfernt wird.

2. Verfahren des Freisetzens von Sondeneinheiten (21, 22) nach dem Verfahren nach Anspruch 1, in welchem Verfahren:
- die Sondeneinheiten (21, 22) vor dem Freisetzen voraufgeladen in der Ballonreserve (14) gelagert werden;
- die Sondeneinheit (21, 22) mittels des automatischen Ballonfreisetzungsgeräts (10) freigesetzt wird;
- die Ballonreserve (14) während Lagerung und Freisetzung stationär gehalten wird;
- die Freisetzung automatisch durch Steuerungsmittel auf der Grundlage von durch Messgeräte (12) erhaltenen Informationen gesteuert wird;
- im Fall einer Fehlfunktion die nächste geeignete Sondeneinheit (21, 22) zum Freisetzen aus der Ballonreserve (14) ausgewählt wird.

3. Verfahren nach Anspruch 2 zum automatischen Freisetzen von Sondeneinheiten (21, 22);
**dadurch gekennzeichnet, dass**
das Gewicht des Ballons (21) mittels Messgeräten entweder direkt oder indirekt gemessen wird, und das Befüllungsniveau des Ballons (21) von diesen Ergebnissen abgeleitet wird.

4. Verfahren nach einem der Ansprüche 2 oder 3 zum automatischen Freisetzen von Sondeneinheiten (21, 22);
**dadurch gekennzeichnet, dass**
die Freisetzungsentscheidung automatisch auf der Grundlage des Befüllungsniveaus des Ballons (21) getroffen wird.

5. Verfahren nach Anspruch 4 zum automatischen Freisetzen von Sondeneinheiten (21, 22);
**dadurch gekennzeichnet, dass**
das Befüllungsniveau mittels einer Waage oder eines entsprechenden, auf Druck reagierenden Mittels gemessen wird, wovon die Messdaten elektronisch empfangen werden, wobei die Waage oder dergleichen das Gewicht des automatischen Ballonfreisetzungsgeräts (10) direkt oder indirekt misst, wobei das Befüllungsniveau des zu befüllenden Ballons (21) von diesem Wert abgeleitet wird.

6. Verfahren nach einem der Ansprüche 3 bis 5 zum automatischen Freisetzen von Sondeneinheiten (21, 22);
**dadurch gekennzeichnet, dass**
die Anwesenheitsdaten von Sondeneinheiten (21, 22) durch Objektträgerfühler erfasst wird.

7. Verfahren nach einem der Ansprüche 2 bis 6 zum automatischen Freisetzen von Sondeneinheiten (21, 22);
**dadurch gekennzeichnet, dass**
die Ballonreserve (14) in ihrer Gänze aus dem Ballonfreisetzungsgerät (10) entfernt werden kann, wobei die Sondeneinheiten (21, 22) der Ballonfreisetzungseinheit (10) durch Ersetzen der Ballonreserve (14) mit einer Neuen vervollständigt werden können.

## Revendications

1. Procédé de libération automatique de ballons avec un appareil de libération automatique de ballons (10) pour des unités de sonde (21, 22), l'appareil de libération de ballons (10) comprenant :
- au moins une réserve de ballons (14) comprenant une pluralité de compartiments de stockage de ballons (11), chaque compartiment de stockage (11) étant adapté à stocker une unité de sonde (21, 22) ;
- des moyens de commande pour commander l'opération de remplissage ;
- des moyens de remplissage pour remplir les ballons (21) des unités de sonde (21, 22) de la réserve de ballons (14) ; et
- des moyens de libération pour libérer les unités de sonde (21, 22),
dans lequel pour remplir chaque ballon (21) d'une unité de sonde respective (21, 22), la réserve de ballons (14) est munie de conduits de remplissage de gaz (13, 24),
dans lequel la réserve de ballons (14) est formée d'une matrice en forme de panier contenant lesdits compartiments de stockage (11),
**caractérisé en ce que** ladite réserve de ballons (14) est retirée en tant qu'unité.

2. Procédé de libération d'unités de sonde (21, 22) selon le procédé de la revendication 1, dans lequel :
- les unités de sonde (21, 22) sont stockées pré-chargées dans la réserve de ballons (14) avant la libération ;
- l'unité de sonde (21, 22) est libérée au moyen de l'appareil de libération automatique de ballon (10) ;
- la réserve de ballons (14) est maintenue immobile pendant le stockage et la libération ;
- la libération est commandée automatiquement au moyen de moyens de commande sur la base d'informations reçues en provenance d'appareils de mesure (12) ;
- en cas de dysfonctionnement, l'unité de sonde appropriée suivante (21, 22) est sélectionnée pour être libérée de la réserve de ballons (14).

3. Procédé selon la revendication 2 pour libérer automatiquement des unités de sonde (21, 22) ;
**caractérisé en ce que**
le poids du ballon (21) est mesuré au moyen d'appareils de mesure soit directement, soit indirectement, et le degré de remplissage du ballon (21) est déduit de ces résultats.

4. Procédé selon l'une quelconque des revendications 2 ou 3 pour libérer automatiquement des unités de sonde (21, 22) ;
**caractérisé en ce que**
la décision de libération est prise automatiquement en fonction du degré de remplissage du ballon (21).

5. Procédé selon la revendication 4 pour libérer automatiquement des unités de sonde (21, 22) ;
**caractérisé en ce que**
le degré de remplissage est mesuré au moyen d'une balance ou d'un moyen correspondant réagissant à la pression, dont les données de mesure sont reçues électroniquement depuis la balance ou similaire mesurant directement ou indirectement le poids de l'appareil de libération automatique de ballon (10), le degré de remplissage du ballon (21) à remplir étant déduit de cette valeur.

6. Procédé selon l'une quelconque des revendications 3 à 5 pour libérer automatiquement des unités de sonde (21, 22) ;
**caractérisé en ce que**
les données de présence d'unités de sonde (21, 22) sont acquises au moyen d'interrupteurs de présence.

7. Procédé selon l'une quelconque des revendications 2 à 6 pour libérer automatiquement des unités de sonde (21, 22) ;
**caractérisé en ce que**
la réserve de ballons (14) peut être entièrement retirée du dispositif de libération de ballons (10), les unités de sonde (21, 22) de l'unité de libération de ballons (10) pouvant ainsi être complétées en remplaçant la réserve de ballons par une nouvelle.
